# EUROPÄISCHE PATENTSCHRIFT

(11) **EP 2 149 292 B1**
(45) Veröffentlichungstag und Bekanntmachung des Hinweises auf die Patenterteilung: **22.09.2010**
(21) Anmeldenummer: 09009414.5
(22) Anmeldetag: 21.07.2009
(51) Int. Cl.: A01D 90/00, A01D 90/02

(54) **Ladewagen zur Aufnahme von am Boden liegenden Erntegut**
Loading vehicle for collecting crops lying on the ground
Chariot de chargement destiné à la saisie de récolte au sol

(30) Priorität: 30.07.2008 DE 102008035505
(43) Veröffentlichungstag der Anmeldung: 03.02.2010
(73) Patentinhaber: CLAAS Saulgau GmbH, 88348 Bad Saulgau (DE)
(72) Erfinder: Sauter, Stefan, 88529 Zwiefalten (DE)
(74) Vertreter: Roth, Klaus

(56) Entgegenhaltungen:
- DE-A1- 1 582 445
- DE-U1- 29 706 454
- FR-A- 1 523 837
- GB-A- 992 092

## Beschreibung

Die Erfindung betrifft Ladewagen zur Aufnahme von am Boden liegenden Erntegut gemäß dem Oberbegriff des Anspruchs 1.

### Stand der Technik

Bekannt sind Ladewagen zur Aufnahme von am Boden liegenden Erntegut für den landwirtschaftlichen Feldeinsatz. Die Aufnahme des Ernteguts erfolgt in bekannter Weise über eine Pick up. Ladewagen dieser Art sind zudem mit einem Schneidaggregat zur Zerkleinerung des Ernteguts ausgestattet. Das Schneidaggregat besteht aus feststehenden Messern, die als Schneidkamm nebeneinander angeordnet sind und das Erntegut wird von einem der Pick up stromaufwärts folgenden Rotor erfasst und durch den Schneidkamm hindurch gepresst, wodurch das Erntegut zerkleinert wird. Rotor und Messerkamm bilden gemeinsam den sogenannten Schneidrotor.

Der Markt fordert ständig Ladewagen mit größerer Ladekapazität, so dass daran gekoppelt größere Achslasten entstehen, die vorzugsweise als Tandemachse ausgebildet sind. Dabei ist es wünschenswert, diese Achsen mit im Durchmesser größeren Laufrädern auszustatten, um den Bodenauflagedruck und damit die Einsinktiefe in den Boden möglichst zu minimieren. Dieses bedeutet gleichermaßen eine Minimierung des Rollwiderstandes, welches einen Beitrag zur Minimierung des Treibstoffverbrauchs des Zugfahrzeugs darstellt. Je größer allerdings der Durchmesser der Laufräder, je größer der Abstand des Bodens des Ladewagens gegenüber der Aufstandsfläche der Laufräder, dem Erdboden. Hinzu kommt, dass das Erntegut nach der Übergabe durch die Pick up an die Schneideinrichtung auch noch eine größere Hubhöhe überwinden muss, welche dadurch bewerkstelligt wird, dass der Boden des Ladewagwagens und damit auch der Kratzboden zunächst ein schräge Ebene darstellt welche in eine etwa waagerechte Ebene übergeht. Dabei erfährt der Verlauf des Kratzbodens eine Abwinkelung bzw. Kröpfung.

Des weitern wird das Erntgut oberhalb des Förderrotors auch senkrecht nach oben gefördert und erreicht schließlich mit fortschreitender Förderung als aufrecht stehende Futtersäule das sogenannte Dachblech und wir damit einer vertikalen Verpressung ausgesetzt. Diese Verpressung ist durchaus erwünscht, weil dadurch der Befüllungsgrad bzw. die Ladekapazität des Ladeagens zunimmt. Dieses hat aber auch zur Folge, dass sich die Zugkraft in den Zugmitteln des Kratzbodens drastisch erhöht, welches mit Problemen mit Stauansammelungen des Ernteguts hinter dem Schneidrotor stromaufwärts verbunden ist. Dieses um so mehr, je höher der Höhenunterschied bzw. der Kröpfungswinkel des abgewinkelten Kratzbodens ist. Hinzu kommt, wenn es zu einer Staubildung der eingespannten Futtersäule kommt, die Schneideinrichtung das Futter vermusst, welches völlig inakzeptabel ist.

Gerade unter diesen vorgenannten Umständen entstehen hohe Zugkraftspitzen an den Zugmitteln des Kratzbodens, welche zu den besagten Störungen und unerwünschten Nebeneffekten im Betriebsablauf führen können. Derartige Störbeseitigungen stellen immer ein erhöhtes Unfallrisiko dar, weil sie Veranlassung zu manuellen Eingriffen liefern. Daher sind der zu überwindenden Höhendifferenz zwischen dem Erdboden und dem Boden und damit der Abwinkelung der Verkröpfung des Ladewagens enge Grenzen gesetzt, welches daher dazu führt, mit kleineren als optimalen Reifendurchmessern der Laufräder des Ladewagens zu arbeiten, wobei der Ladewagen dabei zusätzlich insgesamt nach vorne durch absenken der Deichsel abgesenkt und in eine schräge Lage versetzt wird. Dieses sind Hilfsmaßnahmen, die letztlich Kompromisslösungen darstellen und zulasten des Ladevolumens gehen.

Hinzu kommt, dass später beim Entladen des Ladewagens auf dem Fahrsilo sich die eingespannte Futtersäule in dem kritischen Bereich oberhalb der schrägen Ebene des gekröpften Kratzbodens nur schwer bewegen lässt, weil sie quasi zwischen dem Dachblech und der schrägen Ebene eingespannt ist.

### Aufgabenstellung

Hier setzt die Aufgabe der Erfindung an mit dem Ziel, Ladewagen mit größerer Ladekapazität zu schaffen, welche zudem die Summe der vorgenannten Probleme beseitigen und dieses bei gleichzeitig geringerer Energieaufnahme im laufenden Aufsammelbetrieb. Dabei soll die erfinderische Ausgestaltung zugleich einen Beitrag liefern zu einer Minderung von potentiellen Unfallrisiken durch Vermeidung von Störungen und deren Störbeseitigungen durch manuellen Eingriff.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Bedingt durch einen wenigstens mehrfach abgeknickten Verlauf des Kratzbodens in dem gekröpften Bereich des Kratzbodens, bzw. wenigstens einer zweifachen Kröpfung und Abwinkelung im Übergangsbereich von der schrägen Ebene in die überwiegen horizontale Ebene, werden die Reaktionskräfte bzw. die Zugkräfte in den Zugmittel des Kratzbodens erheblich gesenkt, welches einerseits einen erheblichen Betrag zur Minderung der Energieaufnahme an dem Antrieb des Kratzbodens führt und welches zugleich auch einen Beitrag zu Minderung der Staubildung liefert. Zusätzlich lässt diese Mehrfachkröpfung einen größeren Steigungswinkel des Kratzbodens zu, welcher es ermöglicht, im Durchmesser größere Reifen auf der Tandemachse des Ladewagens zu verwenden. Diese größeren Raddurchmesser sind ein Beitrag zur Bodenschonung und damit auch ein Beitrag zur Umweltschonung insgesamt.

Eine zusätzliche Steuereinrichtung ermöglicht es zudem, die vertikale Verpressung der Futtersäule auf die jeweiligen Futterverhältnisse einzustellen, welches einerseits einen Beitrag zur Qualitätsverbesserung des Ernteguts bzw. Futters für die Tierhaltung liefert und die angesprochene Vermußung vermeiden hilft und andererseits wir es dadurch möglich, eine bessere Restentleerung des Ladewagens zu ermöglichen.

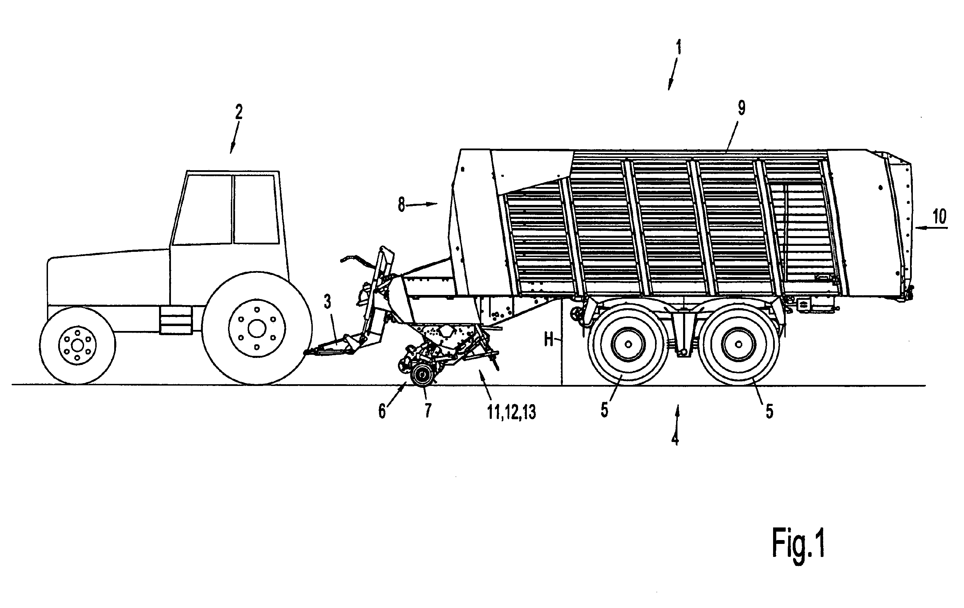

Fig.1 zeigt einen Ladewagen 1 in Betriebsstellung in einer Seitenansicht mit vorgespanntem Zugfahrzeug als Traktor 2. Der Ladewagen 1 ist mittels einer Zugdeichsel 3 an das Zugfahrzeug 2 angehängt. Es wird In der nachfolgenden Beschreibung des Ausführungsbeispiels unterstellt, dass auch die üblicherweise an einem Traktor vorhandenen Zapfstellen, die dem Fachmann bekannt sind, nämlich Zapfwelle, hydraulische, pneumatische und elektrische Energieversorgung, an dem Ladewagen angeschlossen sind, so dass an dieser Stelle darauf nicht näher eingegangen werden muss. Der Ladewagen 1 besteht Im Wesentlichen aus den Grundelementen Fahrgestell mit Tandemachse 4, Pick up 6 mit Tastrad 7 und Schneideinrichtung 11, umfassend den Förderrotor 12 und die Messeranordnung 13 im Scheidrahmen.

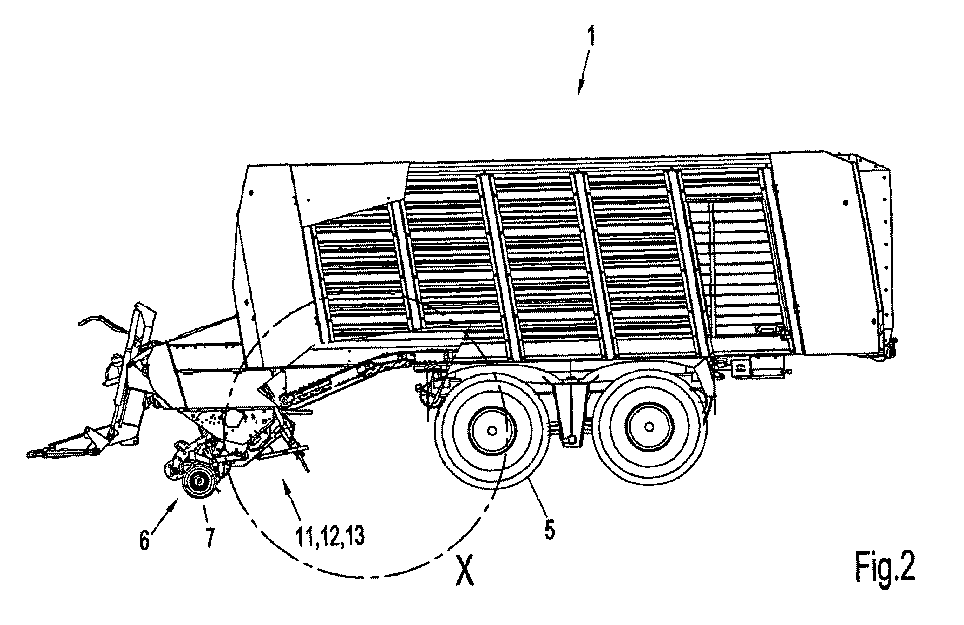

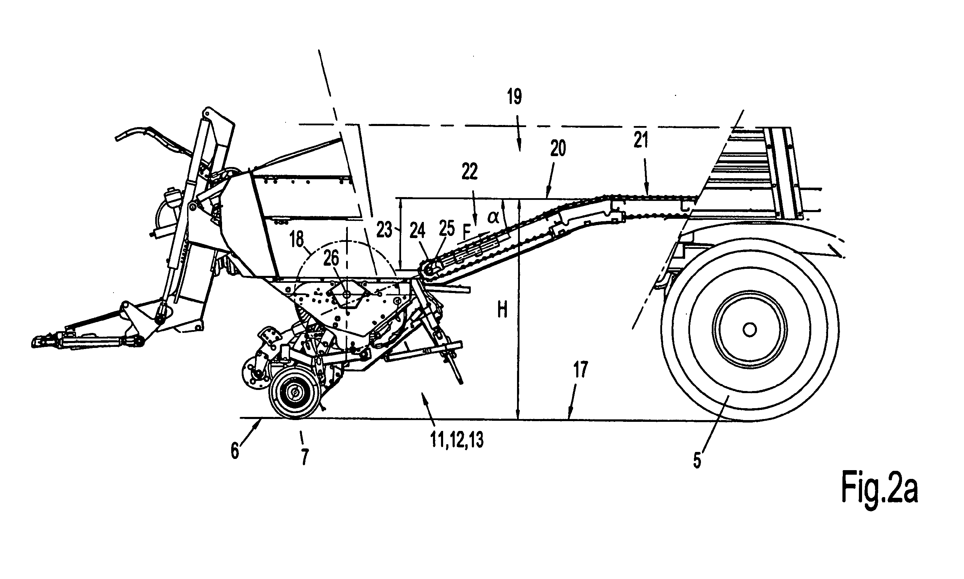

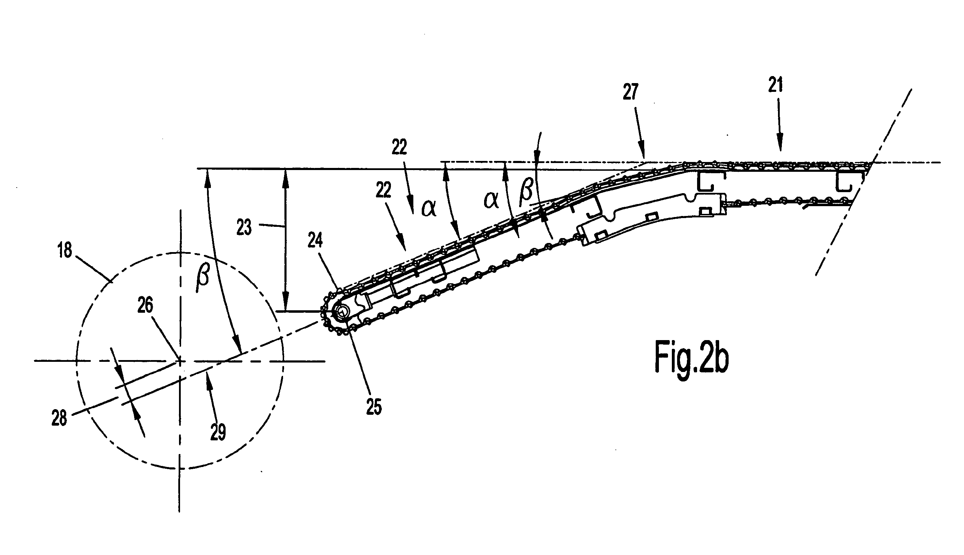

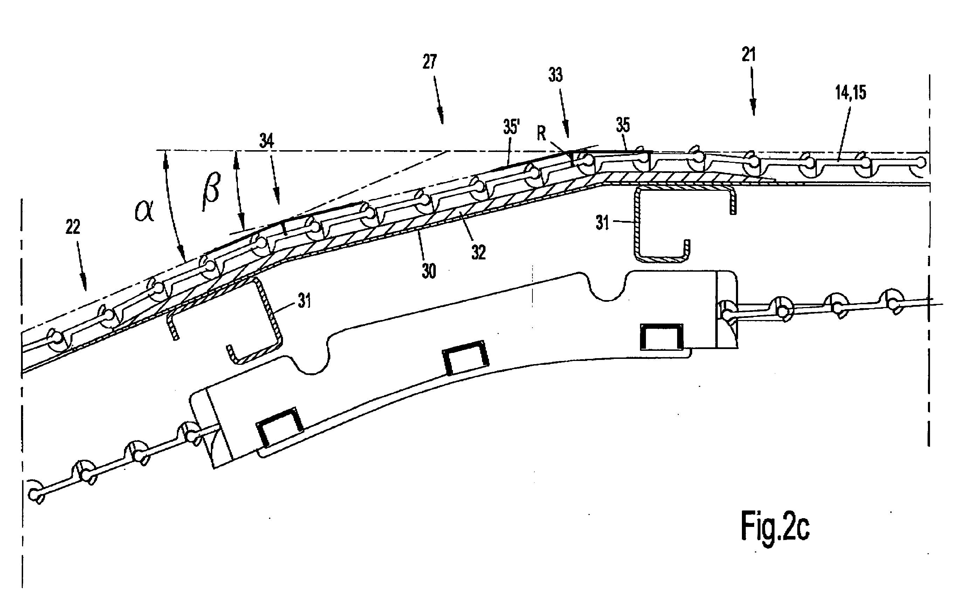

Fig. 2 zeigt den Ladewagen 1 gemäß Fig.1 in einer vergrößerten Darstellung ohne Zugfahrzeug 1 und in einer Darstellung mit einem zeichnerischen Ausbruch, der einen Einblick in das Innere des Ladewagens ermöglicht. Fig.2a zeigt eine Vergrößerung der Einzelheit X gemäß Fig.2, aus der weitere Details der erfinderischen Ausgestaltung des Kratzbodens 19 hervorgehen. Dargestellt Ist der Ladewagen 1 in Fig.2 dieses mal ohne Traktor aber mit abgesenkter Pick up 6, welche sich mit Ihrem Tastrad 7 am Erdboden 17 abstützt. Es geht in dieser Darstellung Insbesondere um die Verkröpfung des Kratzbodens 19 und dabei um die Ausgestaltung der Abwinklung des Zugmittels 14, welches als Gliederkette 15 ausgebildet ist. Kratzböden 19 in Ladewagen 1 sind dem Fachmann grundsätzlich bekannt, so dass es sich erübrigt, an dieser Stelle auf die Funktionsweise näher einzugehen. Der Ladewagen steht mit seinen Laufrädern 5 auf dem Erdboden 17 auf und der Kratzboden oberhalb der Laufräder 5 soll sich in waagerechter Lage befinden, so dass dadurch seine Höhe H gegenüber dem Erdboden 17 In Arbeitsstellung des Ladewagens 1 definiert ist. Der Kratzboden 19 als Ganzes tellt sich auf in drei Sektionen, der ersten Sektion, dem horizontalen Teil 21, der zweiten Sektion, dem schrägen Teil 22 und der mittleren Sektion, dem Kröpfungssteil 27. Im vorderen Teil 20 des Ladewagens kröpft sich der Kratzboden 19 mit dem Kröpfwinkel α gegenüber dem horizontalen Teil 21 ab. Die Gliederkette ist endlos ausgebildet und umschlingt alle drei Sektionen und sie wird über einen nicht dargestellten Antriebsmotor am Heckklappenende des Ladewagens 1 angetrieben. Die Förderrichtung F des Gutflusses des Kratzbodens 19 ist durch einen Richtungspfell gekennzeichnet und die Kettenuss 24 führt die Gliederkette 15 um die Drehachse 25 der Kettenuss herum. Die Drehachse 25 der Kettennuss 24 liegt stromaufwärts vor dem Konturenkreis 18 des Förderrotors, der um seine Drehachse 26 umlaufend angetrieben ist. Die mittlere Sektion 27 verläuft unter einem Kröpfungswinkel β gegenüber dem horizontalen Teil 21, und dessen Argument beträgt vorteilhafterweise die Hälfte des Arguments des Kröpfungswinkels α.

Fig.2b zeigt weitere Einzelheiten des freigelegten und abgewinkelten Kratzbodens 19 gemäß Fig.2a in einem vergrößerten Maßstab. Die Drehachse 25 der Kettennuss 24 liegt erfindungsgemäß in dem Intervall 550 +/- 150 mm, und vorzugsweise bei etwa 550mm und in einem Kröpfungswinkelintervall von einem Kröpfungswinkelbereich von 22° +/- 7°, vorzugsweise bei 22°.Dabei verläuft die Radiale 29, ausgehend von der Drehachse 25 der Kettennuss 24 unter dem Kröpfungswinkel α mit einem Abstandsmaß 28 in dem intervall 75mm +/- 70mm, und vorzugsweise 75mm unterhalb der Drehachse 26 des Förderrotors.

Fig.2c zeigt weitere Details der mittleren Sektion innerhalb des Kröpfungsbereichs 27 in einer vergrößerten Darstellung. Der eigentliche Stützboden 30 des Ladewagens 1 ist als Blechboden dargestellt, welcher auf Querträgern 31 aufliegt. Auf dem Blechboden liegt eine Gleitkufe 32, welche aus einem Kunststoff, beispielsweise einem Polyamid, gefertigt ist. Die Gleitkufe 32 ist dem Verlauf des Stützbodens 30 angepasst und weist zwei Knickstellen 33,34 auf, über die die Gliederkette 15 hinweggeführt wird. Bedingt durch die beiden Knickstellen 33,34 mindern sich die Reibkräfte zwischen der Gleitkufe 32 und der darüber hinweggleitenden Gliederkette 15 erheblich, so dass sich auch dadurch die Trummkraft bzw. das Antriebsdrehmoment am Antriebsmotor des Kratzbodens erheblich reduziert. Der Kräfteverlauf ist an den Knickstellen angetragen und es ist daraus ersichtlich, dass die Resultante aus den Trummkräften 35,35' eine Funktion des Kröpfungswinkels β ist, mit der Folgerung, je kleiner der Winkel β, je kleiner die Auflagerreaktion als Reibkraft R an der Knickstelle 33 bzw. 34, je geringer die Arbeit zur Überwindung der Reibkräfte.

Die Ausführung mit zwei Knickstellen ist beispielhaft zu sehen und es ist ohne weiteres möglich weitere Knickstellen einzufügen.

### Bezugszeichenliste

- 1: Ladewagen
- 2: Zugfahrzeug, Traktor
- 3: Zugdeichsel
- 4: Tandemachse
- 5: Laufräder
- 6: Pick up
- 7: Tastrad
- 8: Stirnwand
- 9: Seitenwand
- 10: Heckklappe
- 11: Schneideinrichtung
- 12: Schneideinrichtung
- 13: Messeranordnung
- 14: Zugmittel
- 15: Gliederkette
- 16: Laufrad
- 17: Erdboden
- 18: Konturenkreis
- 19: Kratzboden
- 20: Horizontale
- 21: horizontaler Teil des Kratzbodens
- 22: schräger Teil des Kratzbodens
- 23: Höhendifferenz
- 24: Kettennuss
- 25: Drehachse Kettennuss
- 26: Drehachse Förderrotor
- 27: Kröpfungssteil
- 28: Abstandsmaß
- 29: Radiale
- 30: Stützboden
- 31: Querträger
- 32: Gleitkufe
- 33: Knickstelle
- 34: Knickstelle
- 35,35': Trummkraft

- α: Kröpfwinkel
- β: Kröpfwinkel
- F: Förderrichtung
- R: Reibkraft

## Patentansprüche

1. Ladewagen zur Aufnahme von am Boden liegenden Erntegut mit einer Pick up Aufnahmevorrichtung, einem stromaufwärts nachgelagerten umlaufend angetriebenen Förderrotor, einem weiter stromaufwärts nachfolgenden abgekröpften Kratzboden mit umlaufend angetriebenen Gliederketten und einer Sektion, ausgebildet als horizontaler Teil (21) und einer Sektion, ausgebildet als schräger Teil (22) des Kratzbodens (19), **dadurch gekennzeichnet, dass** der Kratzboden (19) einen wenigstens zweifach abgewinkelten Verlauf aufweist.

2. Ladewagen nach Anspruch 1, **dadurch gekennzeichnet, dass** der Kratzboden (19) gegenüber dem horizontalen Teil (21) einen ersten Kröpfungswinkel (α) und einen zweiten Kröpfungswinkel (β) aufweist.

3. Ladewagen nach Anspruch 2, **dadurch gekennzeichnet, dass** der Kratzboden (19) einen ersten Kröpfungswinkel (α) in einem Intervall von 22°+/- 7°, vorzugsweise bei etwa 22° aufweist.

4. Ladewagen nach Anspruch 2, **dadurch gekennzeichnet, dass** der zweite Kröpfungswinkel (β) etwa die Hälfte des ersten Kröpfungswinkels (α) beträgt.

5. Ladewagen nach Anspruch 1, **dadurch gekennzeichnet, dass** der Kratzboden (19) eine Gleitkufe (32) aufweist.

6. Ladewagen nach Anspruch 5, **dadurch gekennzeichnet, dass** die Gleitkufe (32) als Kunststoffteil ausgebildet ist.

7. Ladewagen nach Anspruch 1, **dadurch gekennzeichnet, dass** der Kratzboden (19) eine Kettennuss (24) mit einer Drehachse (25) aufweist, dessen Höhendifferenz (23) gegenüber der den horizontalen Teil (21) des Kratzbodens (19) definierenden Horizontalen (20) in dem Intervall 550 +/-150 mm liegt, und vorzugsweise etwa bei 550mm liegt.

8. Ladewagen nach Anspruch 1, **dadurch gekennzeichnet, dass** die Radiale (29), ausgehend von der Drehachse (25) der Kettennuss (24) des Kratzbodens (19) mit dem ersten Kröpfungswinkel (α) mit seinem Abstandsmaß (28) in einem intervall 75mm +/-70mm, vorzugsweise etwa 75mm unterhalb der Drehachse (26) des Förderrotors verläuft.

## Claims

1. Loading vehicle for collecting crops lying on the ground by means of a pick-up collecting device and a rotary-driven conveyor rotor mounted upstream, a double bent scraper floor with rotary driven link chains mounted further upstream and one section designed as a horizontal element (21) and another section designed as an oblique element (22) of the scraper floor (19), **characterised In that** the scraper floor (19) is designed to have at least two bends.

2. Loading vehicle according to claim 1, **characterised In that** the scraper floor (19) has a first bending angle (α) and a second bending angle (13) relative to the horizontal element (21).

3. Loading vehicle according to claim 2, **characterised in that** the scraper floor (19) has a first bending angle (α) in a range of 22°+/-7°, preferably about 22°.

4. Loading vehicle according to claim 2, **characterised in that** the second bending angle (β) Is about half the first bending angle (α).

5. Loading vehicle according to claim 1, **characterised In that** the scraper floor (19) comprises a skid (32).

6. Loading vehicle according to claim 5, **characterised in that** the skid (32) is designed to be a plastic element.

7. Loading vehicle according to claim 1, **characterised in that** the scraper floor (19) comprises a sprocket (24) with a rotary axis (26), the height difference (23) from the horizontal line (20) defining the horizontal element (21) of the scraper floor (19) being In the range of 550 +/- 150 mm, and preferably 550 mm.

8. Loading vehicle according to claim 1, **characterised In that** the radial line (29) taken from the rotary axis (25) of the sprocket (24) of the scraper floor (19) runs at the first bending angle (α) with a clearance (28) in a range of 75 mm +/- 70 mm, preferably about 75 mm below the rotary axis (26) of the conveyor rotor.

## Revendications

1. Véhicule de chargement pour recevoir un produit de récolte réparti sur le sol, comportant un dispositif de ramassage Pick up, suivi d'un rotor de transfert entraîné en rotation, en aval, un fond racleur, coudé, prévu ensuite en aval et comportant des chaînes à maillons entraînées en rotation ainsi qu'une section réalisée sous la forme d'une partie horizontale (21) et une section réalisée sous la forme d'une partie inclinée (22) du fond racleur (19),
**caractérisé en ce que**
le fond racleur (19) présente un tracé au moins deux fois coudé.

2. Véhicule de chargement selon la revendication 1,
**caractérisé en ce que**
le fond racleur (19) présente un premier angle de pliage (α) et un second angle de pliage (β) par rapport à la partie horizontale (21).

3. Véhicule de chargement selon la revendication 2,
**caractérisé en ce que**
le fond racleur (19) a un premier angle de pliage (α) compris dans un intervalle de 22° +/- 7° et est de préférence de l'ordre de 22°.

4. Véhicule de chargement selon la revendication 2,
**caractérisé en ce que**
le second angle de pliage (β) correspond sensible à la moitié du premier angle de pliage (α).

5. Véhicule de chargement selon la revendication 1,
**caractérisé en ce que**
le fond racleur (19) comporte un patin (32).

6. Véhicule de chargement selon, la revendication 5,
**caractérisé en ce que**
le patin (32) est une pièce en matière plastique.

7. Véhicule de chargement selon la revendication 1,
**caractérisé en ce que**
le fond racleur (19) comporte un pignon à chaîne (24) avec un axe de rotation (25), dont la différence de hauteur (23) par rapport à l'horizontale (20) définie par la partie horizontale (21) du fond racleur (19), se situe dans un intervalle de 550 +/- 150 mm et est de préférence de l'ordre de 550 mm.

8. Véhicule de chargement selon la revendication 1,
**caractérisé en ce que**
la radiale (29) partant de l'axe de rotation (25) du pignon à chaîne (24) du fond racleur (19) avec un premier angle de pliage (α), passe à une distance (28) dans une plage de 75 mm +/- 70 mm et est de préférence de l'ordre de 75 mm, sous l'axe de rotation (26) du rotor de transfert.
